# EUROPEAN PATENT APPLICATION

(11) **EP 0 719 668 A1**
(43) Date of publication of application: **03.07.1996**
(21) Application number: 95309230.1
(22) Date of filing: 19.12.1995
(51) Int. Cl.: B60J 10/08, B60J 10/00

(54) **Sealing device**

(30) Priority: 29.12.1994 GB 9426344
(71) Applicant: Standard Products Limited, Huntingdon Cambridgeshire PE18 6NU (GB)
(72) Inventor: Keys, James F., St. Neots, Cambridgeshire PE19 3AB (GB)
(74) Representative: Jones, Michael Raymond

(57) **Abstract**

A sealing device is disclosed which comprises:
a first sealing member (70) comprising an attachment portion (42) and at least one resiliently flexible portion (52, 56);
a second sealing member (74) comprising an attachment portion (18) and at least one resiliently flexible portion (20), and opposite end regions; and
an air flow restricting means (72).

The air flow restricting means (72) joins the first and second sealing members (70, 74), is moulded to or with the first sealing member (70) and is moulded to or with the second sealing member (70).

## Description

This invention relates to a sealing device particularly, although not exclusively, for use on a vehicle, which sealing device is capable of reducing airflow past it.

Sealing arrangements for use on motor vehicles are known which comprise a door seal which is mounted around a door surround of a vehicle and a separate secondary seal which is mounted on the "A" pillar and front door header of the vehicle and which sometimes extends across the rear door header and down the "C" pillar. It has been found that when the vehicle is travelling, particularly at high speeds, air moves along the gap between the secondary seal and door seal, thereby causing considerable noise. In order to overcome the above-mentioned problem, a device known as an air dam is provided between the door seal and secondary seal in the lower region of the "A" pillar in order to bridge the gap between the two seals and thereby restrict air movement when the vehicle is travelling.

However, the expense associated with producing and fitting the above-mentioned sealing arrangement is considerable since several separate mouldings are required. In this respect, there is the secondary seal (usually with an end moulding), the door seal with a moulded joint, and the air dam.

According to a first aspect of the present invention, there is provided a sealing device comprising:
a first sealing member comprising an attachment portion and at least one resiliently flexible portion;
a second sealing member comprising an attachment portion, at least one resiliently flexible portion, and opposite end regions; and
an air flow restricting means;
wherein the air flow restricting means joins the first and second sealing members, is moulded to or with the first sealing member and is moulded to or with the opposite end regions of the second sealing member.

The attachment means of the first sealing member preferably comprises a first leg member joined to a second leg member by a web. The resiliently flexible portion of the first sealing member is conveniently a tubular member connected to a lower portion of the first leg member and the sealing device may comprise a further resiliently flexible sealing portion in the form of a lip member connected to an upper portion of the first leg member. In such an embodiment, the lip member may form a part of a duct, which duct is capable of carrying a liquid, and may act as a drip rail when positioned on a vehicle.

The first sealing member may further comprise a resiliently flexible extended portion which extends from one end of the attachment portion and lip member. The air flow restricting means preferably projects from the extended portion.

The attachment portion of the second sealing member may be in the form of a channel formed by two wall members connected by a web. Preferably, the channel is capable of receiving a flange of a door surround. The resiliently flexible portion of the second sealing member may be at least one tubular member extending from one of the wall members.

The first sealing member may be adapted to be attached by means of the attachment portion to a vehicle in the region of the "A" pillar and front door header member, and the air flow restricting means is preferably moulded to or with the first sealing member in the region of a lower portion of the "A" pillar when in use. The first sealing member may extend further and may be adapted to be attached by means of the attachment portion to a vehicle in the region of the "C" pillar of a vehicle. The first sealing member may be joined to a second sealing member in the region of the "C" pillar when the second sealing member is positioned around a rear door surround of a vehicle. The means of connection may be a moulded joint. In one embodiment, the sealing device further comprises a further second sealing member having opposite end regions which are moulded to or with the first sealing member. Thus, in use, a second sealing member may be positioned around a front door surround of a vehicle and a further second sealing member may be positioned around a rear door surround of a vehicle. Each of these second sealing members may be moulded to or with the first sealing member.

According to a second aspect of the present invention, there is provided a vehicle comprising a sealing device according to the first aspect of the invention which may have the preferred embodiments described above.

According to a third aspect of the present invention, there is provided a method of forming a sealing device according to the first aspect of the invention, which method comprises positioning an end region of the first sealing member and the opposite end regions of the second sealing member into a mould cavity and moulding the first and second sealing members together to form the air flow restricting means.

For a better understanding of the present invention, and to show how the same may be carried into effect, reference will now be made, by way of example, to the accompanying drawings, in which:
Figure 1 shows a perspective view of a vehicle having a sealing device known in the art;
Figure 2 shows a cross-section of a known sealing member;
Figure 3 shows a cross-section of another known sealing member;
Figure 4 shows a cross-section perspective view of the sealing members of Figures 2 and 3 in use;
Figure 5 shows a perspective view of part of a vehicle having one embodiment of a sealing device according to the present invention;
Figure 6 shows a perspective view of part of a vehicle showing an alternative embodiment of a sealing member of the present invention;
Figure 7 shows a diagrammatic view of a known sealing device with a moulded air restricting means;
Figure 8 shows a perspective view, on an enlarged scale, of the sealing member shown in Figure 7;
Figure 9 shows a view similar to that of Figure 7 showing a sealing device of the present invention; and
Figure 10 shows a perspective view of a vehicle in which a sealing device according to the invention is used.

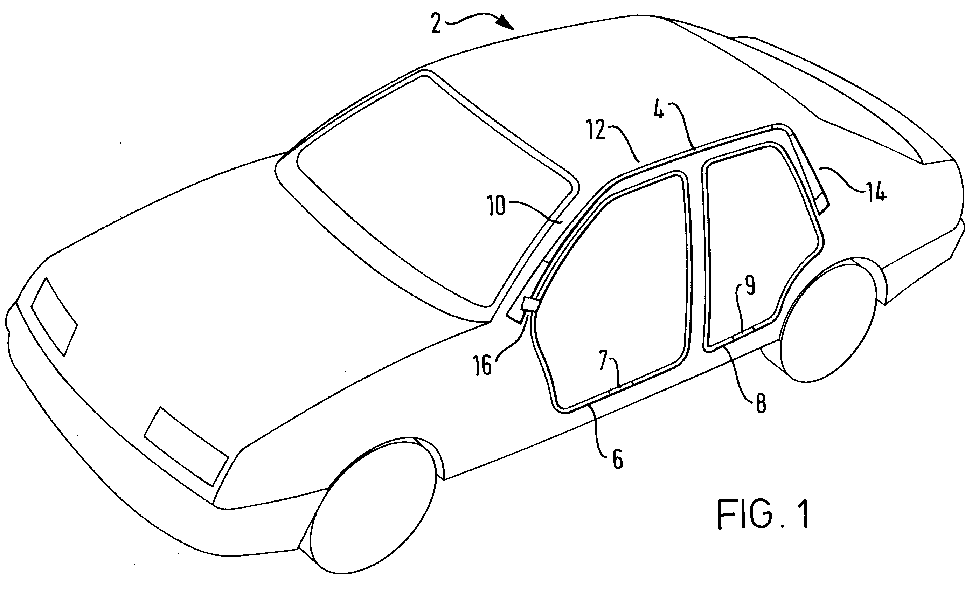

Turning to Figure 1, there is shown a vehicle generally at 2 comprising a drip rail sealing member 4, a front door seal 6, and a rear door seal 8. The drip rail sealing member 4 is attached to a flange on the vehicle which extends along the "A" pillar 10, across the header portion 12 and down the "C" pillar 14. The front door seal 6 and rear door seal 8 are attached to a flange around the respective door surrounds of the vehicle.

As the vehicle travels, there is air movement in the gap between the sealing member 4 and the front and rear door seals 6 and 8. Therefore, an air dam 16 is positioned in the lower region of the "A" pillar 10 between the sealing member 4 and the front door seal 6. This air dam 16 restricts air movement between the sealing members as the vehicle travels.

A joint moulding 7 joins the two ends of the front door seal 6. A similar joint moulding 9 joins the two ends of the rear door seal 8.

In this known arrangement, the separately moulded or extruded components are the drip rail sealing member 4, the front door seal 6, the rear door seal 8, the joint mouldings 7 and 9, and the air dam 16.

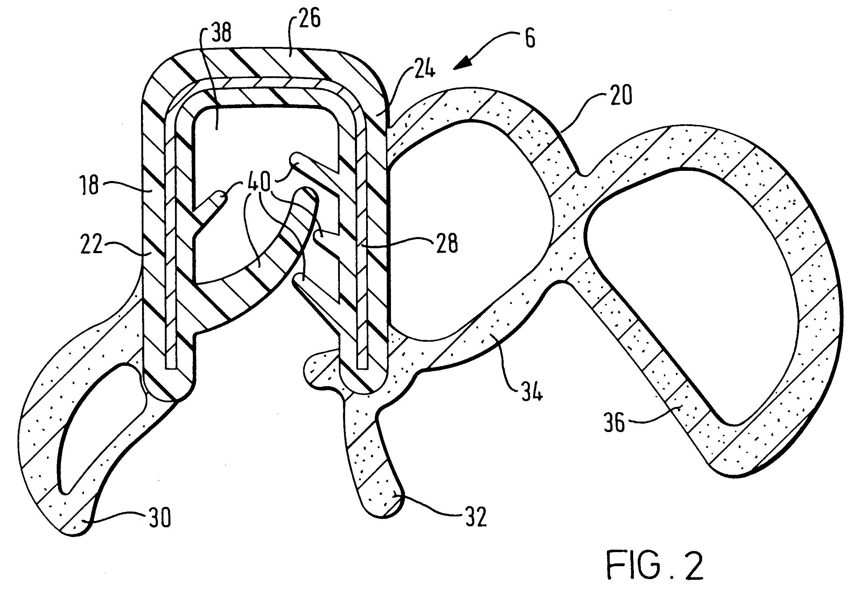

Figure 2 shows the front door seal 6 in cross-section. The rear door seal 8 has an identical cross-section. The front door seal 6 comprises a solid attachment portion 18 and a resiliently flexible portion 20. The attachment portion 18 is made of relatively rigid material and comprises walls 22, 24 joined by a web 26. A reinforcing member 28 is positioned within the attachment portion 18. Extending from a lower portion of the walls 22, 24 are sponge members 30, 32. These sponge members 30, 32 are designed to reduce the possibility of water and air leakage across the door seal 6 when it is positioned on a flange. Such leakage typically occurs when the flange thickness changes. The resiliently flexible portion 20 comprises two hollow tubular members 34, 36. The hollow tubular members 34, 36 are made of a sponge material.

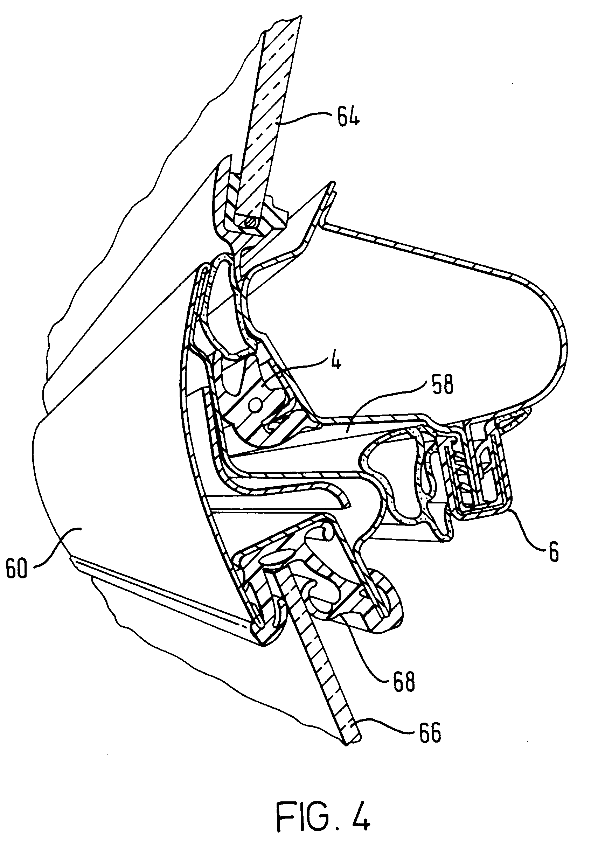

In use, the door seal is attached to the surround of a door by insertion of a flange (shown in Figure 4) on the vehicle into a channel 38 formed by the walls 22 and 24 and web 26. Additional securement is provided by the fingers 40 which project inwardly into the channel 38 from the walls 22 and 24. As a vehicle door is closed against the seal 6, it abuts the tubular member 36 and flexes it and the tubular member 34 in order that member 36 abuts the door in a sealable manner.

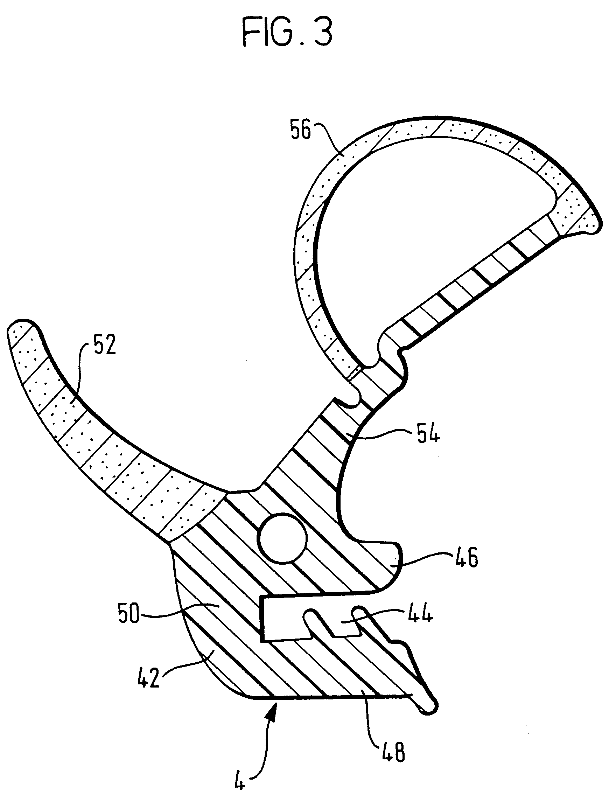

Figure 3 shows a known drip rail sealing member 4 in cross-section. The sealing member 4 comprises an attachment portion 42. A channel 44 is formed by walls 46, 48 joined by a web 50. Extending from an upper portion of the wall 46 is a resiliently flexible lip 52 formed of a sponge material. Extending from a lower region of the wall 46 is a projection 54 on which is positioned a resiliently flexible tubular portion 56.

In use, a flange of a vehicle is inserted into the channel 44 and a vehicle door closes against the lip 52 and resiliently flexible tubular portion 56 which seal against the door. When the door is open, the lip 52 and resiliently flexible tubular portion 56 expand as shown and the lip 52 thereby acts as a drip rail in order to catch rain water or the like falling from the header member 12 or "A" pillar 10 or "C" pillar 14.

Figure 4 shows a cross-section through an "A" pillar region of the sealing device shown in Figure 1. This shows an air gap 58 between the sealing members 4 and 6 along which air may travel when the vehicle is moving.

Also shown in Figure 4 is a portion 60 of the door. The windscreen 64 is held in a fixed position and a movable window 66 of the door slides within a further sealing member 68.

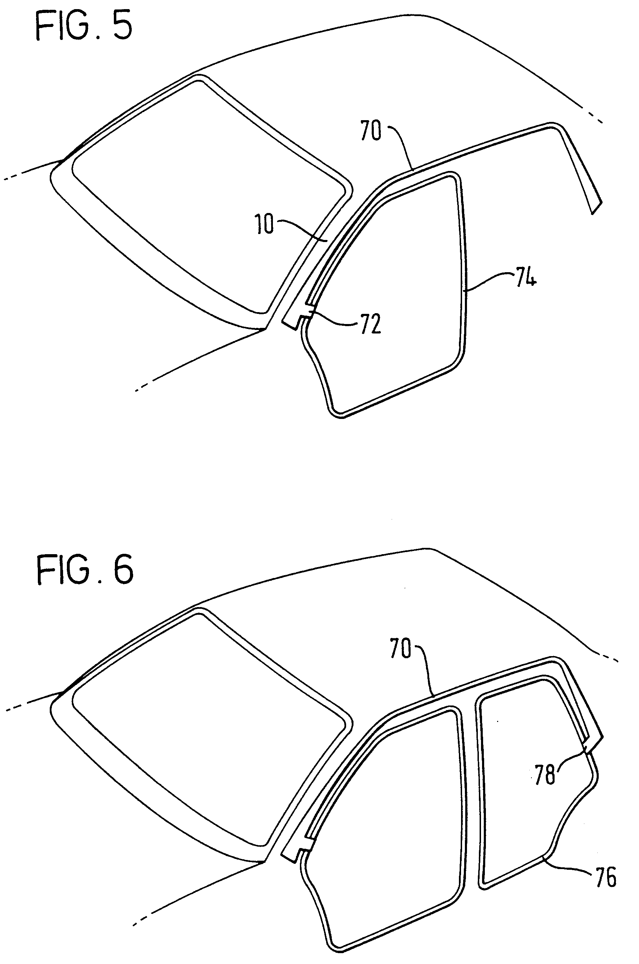

Figure 5 shows a drip rail sealing member 70 according to the present invention which is similar to the drip rail sealing member 4 shown in Figure 1. However, the drip rail sealing member 70 is moulded with an air dam 72 in a region of the sealing member 70 which is positioned on the "A" pillar 10.

Furthermore, the front door seal 74 is of a similar form to the door seal 6 in Figure 1 except that there is no joint moulding in a lower region thereof and it is dispensed with as the two ends of the front door seal 74 are connected to the air dam 72 by means of moulding. Thus, the embodiment shown is made by placing the two ends of the front door seal 74 and the end region of the drip rail sealing member 70 into a mould cavity. The moulding joins them all together and creates the air dam 72. Therefore, the number of moulded elements in relation to the number shown in Figure 1 is reduced.

In Figure 6, a rear door seal 76 of a similar form to the rear door seal 8 of Figure 1 is shown. Rear door seal 76, however, does not have a joint moulding in the lower region thereof. The means of connection is a moulding as described above in relation to the front door seal 74.

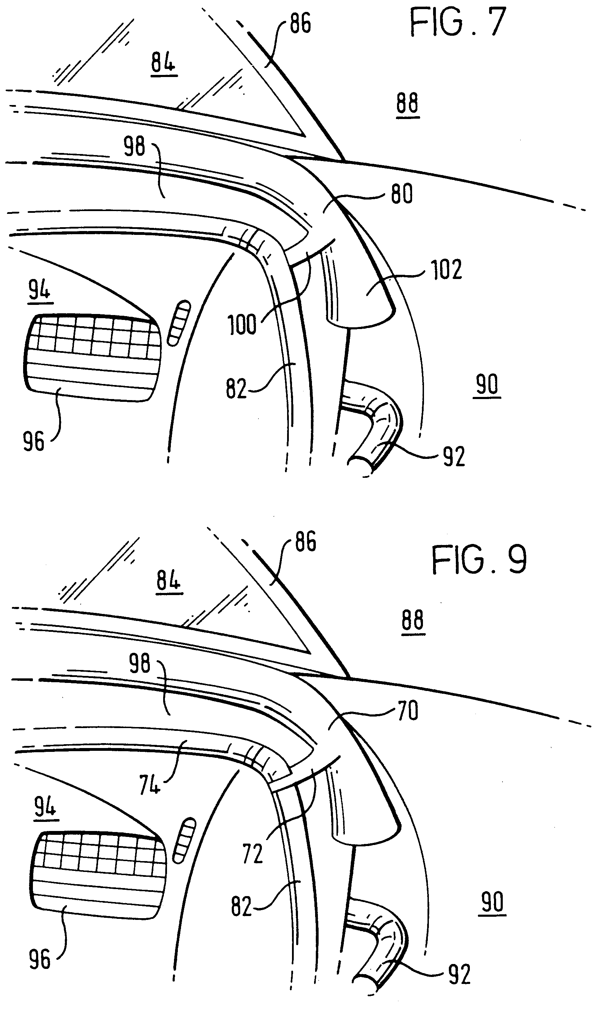

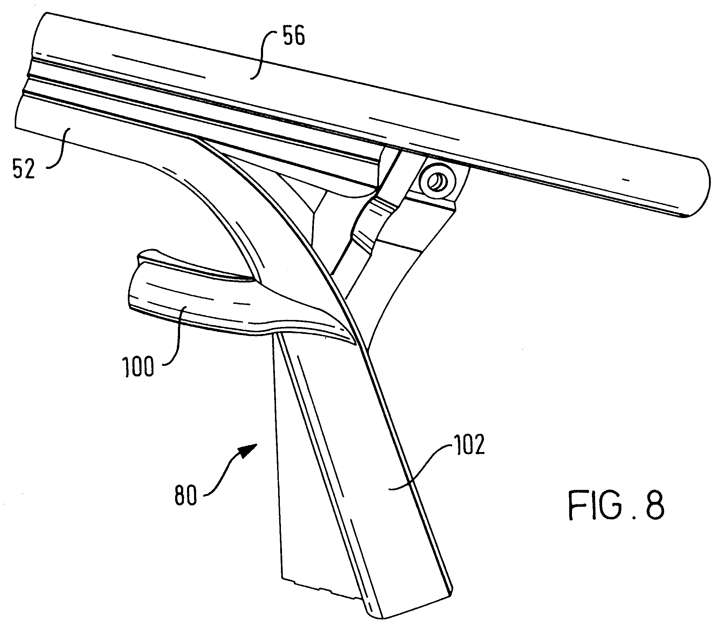

The advantages of the invention are further illustrated by reference to Figures 7 and 9. Figure 7 shows in further detail a known sealing arrangement. A drip rail sealing member 80 and front door seal 82 are shown relative to a windscreen 84, a windscreen surround 86, a bonnet 88, and a wing 90. In the embodiment shown, the door is removed and a flexible connection to the door is illustrated as 92 with a dashboard 94 and heater duct 96 shown. Air may travel along the air gap 98 between the sealing members 80 and 82. In order to prevent this, the sealing member 80 is shown with an air dam 100 which is integral with the sealing member 80 but simply abuts the door seal 82. The door seal therefore has a separate joint moulding (not shown) joining the two ends of the door seal, as shown in Figure 1. The sealing member 80 has an enlarged end portion 102. The enlarged end portion 102 allows the sealing to follow the contours of the car bodywork as the surfaces which are to be sealed diverge in the complicated region of the "A" pillar. The enlarged end portion may also allow retention by means of clips and is also present for cosmetic reasons.

The sealing member 80 shown in Figure 7 is shown in further detail in Figure 8. The detail of the sealing member is similar to that shown in Figure 3. In this respect, a lip 52 and resiliently flexible portion 56 are shown. The lip 52 hides the attachment portion 42 in the embodiment shown. The lip 52 and attachment portion 42 extend to form the enlarged end portion 102 and the integral air dam 100 extends therefrom.

Figure 9 shows in further detail a sealing device of the invention shown in Figure 5. In this respect, the front door seal is connected to the air dam 72 by means of a connection to the two opposite end regions of the second sealing member. The two ends of the door seal 74 are connected to the air dam 72 by means of moulding, thus reducing the number of moulded elements, as described above. The moulding also includes the end region of the sealing member 70. Other parts of Figure 9 are identical to those in Figure 7.

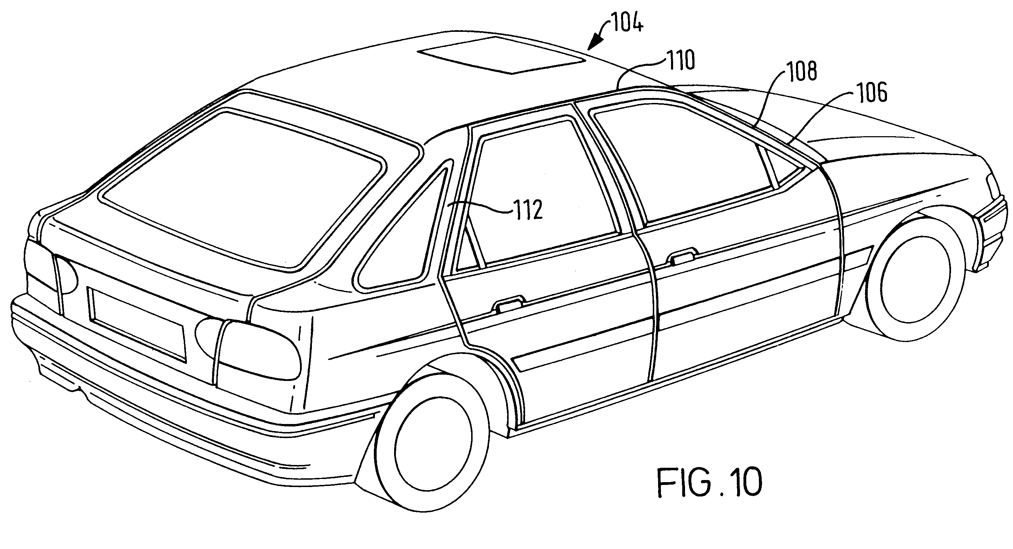

Figure 10 shows a vehicle 104 in which the present invention may be used. The integral air dam 72 is positioned on the sealing member 70 in a lower region 106 of the "A" pillar 108. This restricts air movement along the "A" pillar 108, across the header 110, and down the "C" pillar 112.

## Claims

1. A sealing device comprising:
a first sealing member comprising an attachment portion and at least one resiliently flexible portion;
a second sealing member comprising an attachment portion, at least one resiliently flexible portion, and opposite end regions; and
an air flow restricting means;
wherein the air flow restricting means joins the first and second sealing members, is moulded to or with the first sealing member and is moulded to or with the opposite end regions of the second sealing member.

2. A sealing device according to claim 1, wherein the attachment portion of the first sealing member comprises a first leg member joined to a second leg member by a web.

3. A sealing device according to claim 2, wherein the resiliently flexible portion of the first sealing member is a tubular member connected to a lower portion of the first leg member.

4. A sealing device according to claim 2 or 3, wherein the first sealing member further comprises a further resiliently flexible portion in the form of a lip member connected to an upper portion of the first leg member, wherein the lip member forms a part of a duct, which duct is capable of carrying a liquid.

5. A sealing device according to claim 4, wherein the first sealing member comprises a resiliently flexible extended portion extending from one end of the attachment portion and lip member.

6. A sealing device according to claim 5, wherein the air flow restricting means projects from the extended portion.

7. A sealing device according to any preceding claim, wherein the attachment portion of the second sealing member is in the form of a channel formed by two wall members connected by a web, the channel being capable of receiving a flange of a door surround.

8. A sealing device according to claim 7, wherein the resiliently flexible portion of the second sealing member is at least one tubular member extending from one of the wall members.

9. A sealing device according to any preceding claim, wherein the first sealing member is adapted to be attached by means of the attachment portion to a vehicle in the region of the "A" pillar and header member, and the air flow restricting means is moulded to or with the first sealing member in the region of a lower portion of the "A" pillar.

10. A sealing device according to claim 9, wherein the first sealing member extends and is adapted to be attached by means of the attachment portion to a vehicle in the region of a "C" pillar.

11. A sealing device according to claim 10, wherein the first sealing member is joined to the second sealing member in the region of the "C" pillar.

12. A sealing device according to any preceding claim, further comprising a further second sealing member having opposite end regions, wherein the opposite end regions of the further second sealing member are moulded to or with the first sealing member.

13. A vehicle comprising a sealing device according to any preceding claim.

14. A method of forming a sealing device according to any one of claims 1 to 12, which method comprises positioning an end region of the first sealing member and the opposite end regions of the second sealing member into a mould cavity and moulding the first and second sealing members together to form the air flow restricting means.
